(19) Europäisches Patentamt
European Patent Office
Office européen des brevets

(11) **EP 2 011 706 A2**

(12) **EUROPÄISCHE PATENTANMELDUNG**

(43) Veröffentlichungstag:
**07.01.2009 Patentblatt 2009/02**

(51) Int Cl.:
***B60T 10/02*** *(2006.01)*   ***B60T 5/00*** *(2006.01)*

(21) Anmeldenummer: **08156943.6**

(22) Anmeldetag: **27.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **26.06.2007  DE 102007029462**

(71) Anmelder: **ZF Friedrichshafen AG**
**88038 Friedrichshafen (DE)**

(72) Erfinder: **Altvater, Roland**
**88046 Friedrichshafen (DE)**

(54) **Verfahren zur Regelung eines Retarders eines Kraftfahrzeugs**

(57)   Es wird ein Verfahren zur Regelung eines Retarders eines Kraftfahrzeugs vorgeschlagen, im Rahmen dessen die Energieaufnahmefähigkeit $E_M$ des Systems Motor mit Kühlkreislauf und/oder ER des Systems Retarder mit dem entsprechenden Kühlkreislauf mit oder ohne Getriebe als Kennwert für die Retarderleistungsbestimmung verwendet wird, wobei, wenn die Retarderleistung die noch freie Energieaufnahmefähigkeit des Retarders bzw. des Systems umfassend den Retarder und das Getriebe überschreitet, der Retarder auf diesen Wert zurückgeregelt wird bzw. mit der Rückregelung begonnen wird.

Fig. 1

EP 2 011 706 A2

**Beschreibung**

Die vorliegende Erfindung bezieht sich auf ein Verfahren zur Regelung eines Retarders eines Kraftfahrzeugs gemäß dem Oberbegriff des Patentanspruchs 1.

Aus dem Stand der Technik ist bekannt, das Retardermoment entsprechend der Kühlmittelaustrittstemperatur aus dem Wärmetauscher des Kühlkreislaufs zu regeln. Dabei ergibt sich ein ungünstiges Regelverhalten, welches sich durch einen starken Leistungseinbruch nach Beginn der Rückregelphase auszeichnet. Durch die beteiligten Wärmekapazitäten wird dabei in nachteiliger Weise Energie zwischengespeichert, was in Temperatur- und Momentenüberschwingern resultiert.

Aus der DE 19716919 C2 ist ein Verfahren zur maximalen Ausnutzung der Bremswirkung eines Retarders in einem Fahrzeug bekannt, bei dem die während des Bremsens erzeugte Wärme mit Hilfe eines Kühlmediums eines Kühlsystems abgeführt wird, wobei die aktuell nutzbare Kühlleistung des Kühlkreislaufes bestimmt und/oder ermittelt wird und die Bremsleistung des Retarders mindestens als Funktion der aktuell nutzbaren Kühlleistung des Kühlsystems derart eingestellt wird, dass ein vorgegebener Grenzwert der Kühlleistung nicht überschritten wird. Hierbei ist der Grenzwert der Kühlleistung eine Funktion der Umgebungstemperatur, der Gehäusetemperatur, der Stellung des Thermostaten im Kühlkreislauf, des Druckes im Kühlkreislauf, der Fahrzeuggeschwindigkeit, der Hinterachsübersetzung, der kapazitiven Energieaufnahme der gesamten Kühlanlage, der Gangstellung, des Kupplungszustandes, der Lüfterdrehzahl und/oder der Wasserpumpendrehzahl.

Aus der DE 19716919 A1 ist ein Verfahren zur geregelten Begrenzung der Bremswirkung eines Retarders bekannt, bei dem die während des Bremsens erzeugte Wärme mit Hilfe eines Kühlmittels eines Kühlsystems abgeführt wird, wobei die geregelte Begrenzung der Bremswirkung mindestens nach Erreichen einer vorbestimmten Temperatur einsetzt. Hierbei wird die vorbestimmte Temperatur in Abhängigkeit vom zeitlichen Temperaturverlauf des Kühlmediums und/oder Arbeitsmediums des Retarders so gewählt, dass die Kühlleistung des Kühlsystems maximal ausgenutzt wird.

Des weiteren ist aus der DE 198 48 544C1 ein Verfahren zur Erhöhung der Bremsmomentenausnutzung eines hydrodynamischen Retarders in einem Kraftfahrzeug bekannt, im Rahmen dessen die während des Bremsens erzeugte Wärme des hydrodynamischen Retarders mit Hilfe eines Kühlmediums abgeführt wird, wobei in Abhängigkeit vom Retarderbetriebszustand wenigstens ein Nebenverbraucher und/oder ein geschalteter Lüfter, ein geschalteter Thermostat, eine Kühlmittelpumpe und/oder ein Bypass-Ventil des Kühlsystems angesteuert wird.

Die DE 10009959 A1 beschreibt ein Verfahren zur Verbesserung der Verfügbarkeit einer Antriebsmaschine in Antriebssystemen mit einer Bremseinrichtung, insbesondere einem hydrodynamischen Retarder, wobei der Antriebsmaschine und der Bremseinrichtung ein Kühlmittelkreislauf zugeordnet ist und die Kühlmittelkreisläufe thermisch miteinander wenigstens mittelbar gekoppelt sind, bei dem die Bremsleistung der Bremseinrichtung als Funktion der Kühlleistung des Kühlmittelkreislaufes der Antriebsmaschine steuer- und/oder regelbar ist. Hierbei erfolgt die Steuer- und/oder Regelung in Abhängigkeit einer, die Rücklauftemperatur des Kühlmittels im Bereich des Austrittes aus der Bremseinrichtung wenigstens mittelbar charakterisierenden Größe.

Der vorliegenden Erfindung liegt die Aufgabe zugrunde, ein Verfahren zur Regelung eines Retarders eines Kraftfahrzeugs anzugeben, durch dessen Durchführung, die aus dem Stand der Technik bekannten Nachteile weitgehend vermieden werden. Insbesondere soll ein starker Leistungseinbruch nach Beginn der Rückregelphase sowie die Temperatur- und Momentenüberschwinger weitgehend vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Regelung eines Retarders eines Kraftfahrzeugs vorgeschlagen, im Rahmen dessen die Energieaufnahmefähigkeit $E_M$ des Systems Motor mit Kühlkreislauf und/oder ER des Systems Retarder mit dem entsprechenden Kühlkreislauf mit oder ohne Getriebe als Kennwert für die Retarderleistungsbestimmung verwendet wird. Überschreitet die Retarderleistung die noch freie Energieaufnahmefähigkeit des Retarders bzw. des Systems Retarder und Getriebe wird der Retarder auf diesen Wert zurückgeregelt bzw. es wird mit der Rückregelung begonnen.

Die maximale Energieaufnahmefähigkeiten $E_{Max, M}$ des Systems Motor mit Kühlkreislauf und $E_{Max, R}$ des Systems Retarder mit dem entsprechenden Kühlkreislauf werden durch folgende Formeln wiedergegeben.

$$E_{\max,M} = \sum m_{iM} * cp_{iM} * (T_{\max,i} - T_{Basis})\ \textit{mit den Baugruppen Motor, Kühlmittel, Massen des Kühlsystemes}$$

$$E_{\max,M} = m_{Mot} * cp_{Mot} * (T_{\max,Mot} - T_{Basis}) + m_{KM} * cp_{KM} * (T_{\max,KM} - T_{Basis}) + m_{KS} * cp_{KS} * (T_{\max,KS} - T_{Basis}) + etc.$$

$$E_{\max,R} = \sum m_i * cp_i * (T_{\max,i} - T_{Basis}) \; mit \; den \; Baugruppen \; Getriebe, \ddot{O}l, Massen \; des \; Retarders$$

$$E_{\max,R} = m_{Get} * cp_{Get} * (T_{\max,Get} - T_{Basis}) + m_{\ddot{O}l} * cp_{\ddot{O}l} * (T_{\max,\ddot{O}l} - T_{Basis}) + m_{Ret} * cp_{Ret} * (T_{\max,Ret} - T_{Basis}) + etc.$$

Da es sich bei den betrachteten Elementen immer um Elemente aus mehreren Materialien mit einer unterschiedlichen inneren Temperaturverteilung handelt, sind die Werte für m, cp, und T aus einer Nebenrechnung oder einem Versuch zu bestimmen.

Überschreitet die Retarderleistung Qret im Betrachtungszeitraum Δt1 die noch freie Energieaufnahmefähigkeit $E_{R,\,frei}$ des Retarders oder des Systems umfassend den Retarder und das Getriebe wird der Retarder auf diesen Wert zurückgeregelt, oder es wird mit der Rückregelung begonnen. Es gelten folgende Gleichungen:

$$E_{R,frei} = E_{\max,R} - E_{Ret}$$

$$E_{Ret} = Q_{Ret} * \Delta t_1 \qquad \Rightarrow \qquad Q_{Ret} = \frac{E_{Ret,frei}}{\Delta t_1}$$

Die bis zum Rückregelbeginn verbleibende Zeit (Δt2) lässt sich rechnen zu;

$$\Delta t_2 = \frac{E_{Ret,frei}}{Q_{Ret}}$$

Unterschreitet diese Zeit (Δt2) eine Mindestzeit so muss zurückgeregelt werden. Die anzuwendende Rückregelstrategie kann auf einer Kennlinie $Q_{Ret,red} = Q_{Ret} - Q_{Ret} * f(\Delta t_2)$, gemäß der Erfindung auf einer Leistungsaufnahmeberechnung oder auf einer Leistungsbegrenzung durch eine Kennlinie basieren.

Wird der Retarder einzeln betrachtet und liegen im stationären Betriebszustand nur geringe oder sogar keine Daten über das Kühlsystem vor, wird die vom Wärmetauscher WT übertragene Leistung weitgehend der maximalen Retarderleistung entsprechen. Das Wärmetauscher-Wärmeübertragungskennfeld ist physikalisch mindestens von den Größen VpÖl (Ölvolumenstrom), VpKM, (Kühlmittelvolumenstrom) Öltemperatur, Kühlmitteltemperatur, Kühlmittel-Typ, ÖI-Typ sowie von der Baugeometrie abhängig. Durch vorkonfektionieren des Wärmeübertragungskennfeldes WK in einer Vorrechnung kann dies in vorteilhafter Weise vereinfacht werden. Hierbei wird der unbekannte Kühlmittelvolumenstrom (Auslegungskühlmittelstrom liegt vor, oder ein typischer Kühlmittelstrom wird angenommen) durch die Getriebeübersetzung ersetzt. Der Wert der Wärmeübertragung ist damit nur noch von der Abtriebsdrehzahl oder der von ihr abgeleiteten Fahrzeuggeschwindigkeit abhängig.

Es ergibt sich damit die übertragene Wärmeleistung $Q_{WT}$ zu

$$Q_{WT} = \theta_{WT} (n_{Retarder}, Gang) * f_{WT} * (T_{Retarder\,aus} - T_{KM\,vorWT}),$$

mit $f_{WT}$ = fahrzeugspezifischer Korrekturfaktor, der durch bestimmte Betriebspunkte während des Betriebes identifiziert oder am Bandende eingegeben werden kann;

$T_{\ddot{O}l\,Retarderaus}$ = Retarderaustrittstemperatur;

$T_{KMvorWT}$ = Kühlmitteleintrittstemperatur, wobei nur die ausgeregelte maximale Kühlmitteltemperatur erforderlich ist, die durch bestimmte Betriebspunkte während des Betriebes identifiziert und angepasst werden kann und wobei nach aktuellen Erkenntnissen als konservativer Startwert der Wert 105°C dienen kann.

$\theta_{WT}$ = $f(n_{Retarder}, Gang)$ = Wärmeübertragungskennfeld, das durch Vorrechnungen bestimmt wird, wobei für einen Gang ein ein- oder mehrdimensionales Polynom verwendet werden kann.

Damit ergibt sich der aktuelle Energieinhalt des Systems (i) zu $E_i = m_i cp_i (T_i - T_{Basis})$

Mit der zu- und abfliesenden Energie ergibt sich für den Retarder in der Zeit dt

$$E_{R,akt} = \sum m_i\, cp_i\, (T_i - T_{Basis}) + P_R \Delta t - \theta_{WT}\, (T_{Öl} - T_{KM})\Delta t$$

oder die noch verbleibende Zeit $\Delta t$ bis das System überhitzt ergibt sich aus folgender Gleichung:

$$\frac{E_{\max,R} - \sum m_i\, cp_i\, (T_i - T_{Basis})}{P_R - \theta_{WT}\, (T_{Öl} - T_{KM})} = \Delta t\;,$$

wobei

$$E_{\max,R} = \sum m_i * cp_i * (T_{\max,i} - T_{Basis})\; \text{mit den Baugruppen}\, Getriebe, Öl, Massen\, des\, \mathrm{Re}\,tarders\;,$$

$P_R =$       Retarderleistung

$T_{Basis} =$      Basistemperatur, bleibt konstant und wird bei der Systemauslegung festgelegt

$$\frac{T_{\max,R} - T_{Öl}}{P_R - \theta_{WT}\, (T_{Öl} - T_{KM})} = \frac{\Delta t}{m\, cp} = A$$

$$\left[\frac{T_{\max,R} - T_{Öl}}{A} - \theta_{WT}\, (T_{Öl} - T_{KM})\right]\frac{1}{\omega_R} = M_R$$

und wobei A in K/W eine Kenngröße für die Temperaturerhöhung mit der Retarderleistung ist.

Wird als Kühlmittel-Temperatur $T_{KM}$ = $T_{KMvorWT}$ die höchste zulässige Motoraustrittstemperatur angenommen, so kann ohne weiteres das aktuelle maximale Retardermoment $M_R$ ermittelt werden. Wird jedoch zusätzlich die Kühlmittel-Temperatur $T_{KM}$ gemessen, indirekt abgeleitet oder rechnerisch bestimmt, so kann das Retardermoment noch exakter geregelt werden.

Die Druckabhängigkeit der Siedetemperatur des Kühlmittels wird erfindungsgemäß berücksichtigt, wobei auch berücksichtigt wird, dass der Druck nach dem Wärmetauscher vom hydraulischen System abhängig ist. Das hydraulische System ist von den Druckwiderständen in den Rohrleitungen, vom Thermostat, vom Radiator und von dem Motor sowie von dem Volumenstrom des Kühlmittels bestimmt; der Volumenstrom des Kühlmittels ist zudem von der Motordrehzahl abhängig. Gemäß der Erfindung wird auch der Einfluss der auslegungsrelevanten Kühlmittelzusammensetzung berücksichtigt. Damit kann ein Minimalwert der Siedetemperatur des Kühlmittels $T_{Siede,max}$ durch folgende Funktion in Abhängigkeit von der Motordrehzahl $n_{Mot}$ dargestellt werden, wobei $f_{Siede}$ die Erhöhung der Siedetemperatur je Motordrehzahl angibt. Diese Konstante ist kühlsystemabhängig.

$$T_{Siede,\max} = T_{Siede;1bar} + n_{Mot} * f_{Siede}$$

Zur Bestimmung der Kühlmitteleintrittstemperatur, $T_{KMvorWT}$ d. h. der Kühlmitteltemperatur vor dem Wärmetauscher wird eine fahrzeugspezifische Kühlmitteltemperatur vor dem Wärmetauscher benötigt. Diese ist fahrzeug-, umgebungs- und wartungsabhängig und kann durch Messung mittels eines Temperatursensors, durch Annahme eines konservativen Startwertes $T_{KmvorWT, Basis}$ und eine anschließende rechnerische Korrektur während des Dauerlastbetriebes ermittelt werden, wobei im letzteren Fall gilt:
Wenn

$$\frac{dM_R}{dt} \leq Grenzwert \quad und \, / \, oder \quad \frac{dT_{\ddot{O}l}}{dt} \leq Grenzwert$$

dann ist $T_{KM\,vorWT} = T_{KM\,vorWT,Basis} - (T_{R,max} - T_R)$ mit $M_R$ = Retardermoment und $T_R$ = Retardertemperatur.

Im Rahmen einer vorteilhaften Weiterbildung kann eine zusätzliche motordrehzahlabhängige Siededruckkorrektur vorgesehen sein, die wie bereits erläutert, von der Motordrehzahl $n_{Mot}$ abhängig ist. In diesem Fall gilt:

$$T_{KM\,vorWT} = T_{KM\,vorWT,Basis} - (T_{R,max} - T_R) - n_{Mot} * f_{Siede} \, ,$$

wobei $T_{R,max}$ die am Retarderöltemperatursensor maximal zulässige Dauertemperatur ist.

Gemäß der Erfindung kann die Kühlmitteltemperatur vor dem Wärmetauscher auch mittels eines Siedesensors und anschließender Berechnung oder mittels eines Siedesensors und anschließender Korrektur berechnet werden.

Wird bei der aktuellen Kühlmitteltemperatur vor dem Wärmetauscher $T_{KM\,vorWT}$ und Dauerbetrieb kein Sieden erkannt so wird $T_{KM\,vorWT}$ schrittweise verringert anderenfalls schrittweise erhöht. Dabei fallen gemäß der Erfindung die Erhöhungsschritte größer als die Verringerungsschritte aus. Diese Prüfung wird in größeren Zeitabschnitten (Größenordnung ca.20 Sekunden) und Dauerlastbetrieb ausgeführt.

Gemäß der Erfindung wird optional eine Leistungsanpassung durch Kühlmittel-Druckmessung vor und/oder nach dem Wärmetauscher durchgeführt, da die Siedetemperatur durch den Absolutdruck des Kühlmittels beeinflusst wird. Niedriger Druck kann große Höhen (Bergfahrt, Pass), geringe Motordrehzahl und/oder eine eingeschaltete Heizung, die vor dem Wärmetauscher zugeschaltet ist, bedeuten. Ein hoher Druck kann eine niedrige Höhe (Fahrt im Tal) und/oder hohe Motordrehzahl bedeuten.

Bei Berücksichtigung des Absolutdrucks des Kühlmittels wird $T_{KM\,vorWT}$ zusätzlich wie folgt korrigiert:

$$T_{KM\,vorWT} = T_{KM\,vorWT,Basis} - (T_{R,max} - T_R) - f_{KM}(p_{WT} - p_{Basis})$$

mit $f_{KM}$ = Korrekturfaktor in K/bar, abgeleitet aus der Siedekurve (für Kühlmittel enthaltend 50% Wasser und 50% Glysantin® beträgt der Korrekturfaktor ca. 19 K/bar);

$p_{WT}$ = gemessener Druck in bar vor oder nach dem Wärmetauscher

$p_{Basis}$ = Referenzdruck in bar für die Temperaturkorrektur

Des weiteren kann durch eine Langzeitkorrektur, bei der bei jedem Überschreiten der zulässigen Toleranzgrenze die Kühlmitteleintrittstemperatur um einen Langzeitkorrekturwert $T_{Langzeit}$ korrigiert wird, die Einstellung der Kühlmitteleintrittstemperatur weiter optimiert werden. Hierbei gilt:

$$T_{KM\,vorWT} = T_{KM\,vorWT,Basis} - (T_{R\,max} - T_R) - f_{KM}(p_{WT} - p_{Basis}) - T_{Langzeit} \, .$$

$T_{Langzeit}$ wird in kleinen Temperaturschritten bei jedem Dauerbetrieb des Retarders erhöht, bis eine Retarderabregelung im Dauerbetrieb im Kühlsystem erfolgt. Wird jedoch $B = T_{R\,max} - T_R$ negativ wird $T_{Langzeit}$ um den Betrag B verringert. Diese Anpassung kann einmal täglich, wöchentlich oder monatlich erfolgen; in vorteilhafter Weise lassen sich dadurch Effekte wie Fahrerverhalten, Routen, jahreszeitliche Einflüsse, Reinigungszustand der Kühlanlage und/oder Änderungen am Fahrzeug und der Kühlanlage berücksichtigen.

Durch die unterschiedliche Korrekturen kann es vorkommen, dass die Kühlmitteleintrittstemperatur $T_{KMvorWT}$ unzulässig niedrig wird. Um dies zu verhindern, ist es erfindungsgemäß möglich, eine minimale Kühlmitteleintrittstemperatur $T_{KMvorWT}$ festzulegen und die Kühlmitteleintrittstemperatur $T_{KMvorWT}$ zu verwenden, um über eine weitere Funktion bzw. ein weiteres Kennfeld die Retarderleistung zu reduzieren.

Üblicherweise arbeitet der Retarder zuerst mit maximalem Moment, um dann abrupt in den Regelzustand überzugehen. Ist dieser Vorgang zu abrupt und damit störend, kann gemäß der Erfindung die verbleibende Zeit dt verwendet werden, um den Retarder vorzeitig zurückzuregeln. Zu diesem Zweck wird über eine Funktion bzw. über ein Kennfeld die Retarderleistung reduziert.

Ergänzend zur Energiebetrachtung des Retarders wird erfindungsgemäß die selbe Überlegung auf das Kühlsystem angewendet, um die noch freie Energieaufnahmefähigkeit des Kühlsystems zu bestimmen, wobei zu diesem Zweck das Kühlsystem nicht im ausgeregelten Zustand sein muss. Ausgeregelt ist das Kühlsystem, wenn der Lüfter voll an und der Thermostat voll geöffnet ist.

Die Energieaufnahmefähigkeit des Kühlsystems ($E_K$) ergibt sich aus folgender Gleichung:

$$E_K = m_{iM}\, cp_{iM}\, T_{KM} + P_{PvMot}\, \Delta t + P_{WT}\, \Delta t - P_{Ra}\, \Delta t + P_{Div.}\, \Delta t$$

mit
$P_{PvMot}$ = Wärmeeintrag des Motors ins Kühlsystem
$P_{Div.}$ = Wärmeeintrag diverser Aggregate (Luftpresser, etc.)
$P_{Ra}$ = und Wärmeaustrag des Radiators und der Verrohrung
$P_{WT}$ = Wärmeeintrag des Retarder-Wärmetauschers, wobei gemäß einer vorteilhaften Ausgestaltung der Erfindung $P_{PvMot}$ und $P_{Div.}$ nicht mitbetrachtet werden und wobei $P_{Ra} = f_{Ra}\,{}^\circ\theta_{Ra}\,(T_{Ra} - T_{KMvorWT})$ und $\theta_{Ra} = f(n_{Motor}, T_{KmvorWT})$ oder und $\theta_{Ra} = f(n_{Motor}, nLüfter)$. Das Wärmeübertragungskennfeld kann wie $\theta_{WT}$ durch Polynome bestimmt werden.

Die noch verbleibende Zeit bis das Kühlsystem überhitzt ergibt sich zu

$$\frac{E_{K\max} - m_{iM}\, cp_{iM}\, T_{KM}}{P_{WT} - P_{Ra}} = \Delta t$$

$$E_{K\max} = m_{iM}\, cp_{iM}\, T_{KM\max}$$

mit $T_{KM\max} = ca.\,110°C$ *konstruktionsbedingt* ($E_{Kmax}$ = Maximale Energieaufnahmefähigkeit des Systems, $T_{KMmax}$ = maximale Kühlmitteltemperatur, $T_{KM}$ = Kühlmitteltemperatur). Im Retarderdauerbetrieb reduziert sich die Gleichung zu:

$$\frac{m_{iM}\, cp_{iM}\, (T_{KM\max} - T_{KM})}{P_{WT} - P_{Ra}} = \Delta t$$

und es kann der Faktor $f_{Ra}$ ermittelt werden:

$$\frac{P_R}{\theta_{Ra}\,(T_{Ra} - T_{KM\,vorWT})} = f_{Ra}$$

Der Faktor $f_{Ra}$ ist fahrzeugspezifisch und muss nur gelegentlich angepasst werden. Es ist bei der ersten Dauerlastfahrt und dann in regelmäßigen Zeitintervallen (Tage, Wochen oder Monate) zu bestimmen und anzupassen.

Der zuerst ermittelte Wert für $f_{Ra}$ ist gemäß der Erfindung langfristig zu speichern. Treten markante Abweichungen zum aktuell ermittelten Wert auf so deutet das auf ein Wartungsproblem oder einen Fehlerfall hin so dass der Fahrer informiert werden muss. Dies kann über ein CAN - Signal an den Fahrzeugrechner erfolgen und/oder mittels einer Signallampe oder auf einem Display angezeigt werden.

Um dem Fahrzeugführer ein Planungsmittel für den Retardereinsatz zu geben, können gemäß der Erfindung situationsabhängig folgende Größen mittels einer geeigneten Anzeigevorrichtung angezeigt werden:

- aktuelles ungeregeltes Retardermoment, maximal mögliches Retardermoment oder
- aktuelles ungeregeltes Retardermoment, Restzeit bis Rückregelung beginnt oder
- aktuelles geregeltes Retardermoment, Gangempfehlung

- aktuelles geregeltes Retardermoment, mögliches Retardermoment im nächst niedrigeren Gang (sofern möglich) oder nach einer rückgeregelten Retarderphase
- maximal mögliches Retardermoment und/oder
- Zeit bis das maximalmögliche Retardermoment zur Verfügung steht
  oder bei Bedarf
- Empfehlung für eine Wärmetauscher-Reinigung (Radiator)
- Kavitation im Wärmetauscher, Handlungsempfehlung (wie z.B.: "Bitte Gang n einlegen", "Motor mit erhöhter Drehzahl laufen lassen", "Motor laufen lassen").

Die Kavitation im Wärmetauscher kann durch Messung des Kühlmitteldruckes hinter dem Wärmetauscher, vor dem Wärmetauscher oder im Wärmetauscher erfolgen. Alternativ dazu kann die Kavitation durch Berechnung einer Ersatzkenngröße für die Siedetemperatur $T_{Siede1}$ und Vergleich dieser Größe mit der gerechneten Kühlmittel-Temperatur nach dem Wärmetauscher bestimmt werden.

In der beigefügten Figur sind wesentliche Schritte dieser Konzeption dargestellt. Wenn während der Fahrt die Siedetemperatur kleiner als die Temperatur nach dem Wärmetauscher ist wird der optimale Gang bestimmt, wobei eine entsprechende Meldung zum Einlegen des optimalen Ganges ausgegeben wird. Wenn bei stehendem Fahrzeug die Siedetemperatur kleiner als die Temperatur nach dem Wärmetauscher ist und die Öltemperatur größer als ein Schwellenwert für die Siedetemperatur ist (der Schwellenwert ist höher als die Siedetemperatur), dann wird die Meldung "Motordrehzahl erhöhen" ausgegeben. Wenn die Öltemperatur den Schwellenwert nicht überschreitet wird die Meldung" Motor laufen lassen" ausgegeben.

**Patentansprüche**

1. Verfahren zur Regelung eines Retarders eines Kraftfahrzeugs, **dadurch gekennzeichnet, dass** die Energieaufnahmefähigkeit $E_M$ des Systems Motor mit Kühlkreislauf und/oder ER des Systems Retarder mit dem entsprechenden Kühlkreislauf mit oder ohne Getriebe als Kennwert für die Retarderleistungsbestimmung verwendet wird, wobei, wenn die Retarderleistung die noch freie Energieaufnahmefähigkeit des Retarders bzw. des Systems umfassend den Retarder und das Getriebe überschreitet, der Retarder auf diesen Wert zurückgeregelt wird bzw. mit der Rückregelung begonnen wird.

2. Verfahren zur Regelung eines Retarders eines Kraftfahrzeugs nach Anspruch 1, **dadurch gekennzeichnet, dass** die bis zum Rückregelbeginn verbleibende Zeit (Δt2) anhand der Gleichung

$$\Delta t_2 = \frac{E_{\mathrm{Re}t,frei}}{Q_{\mathrm{Re}t}}$$

aus der Retarderleistung (Qret) und der noch freien Energieaufnahmefähigkeit $E_{R,\,frei}$ berechnet wird, wobei, wenn diese Zeit eine Mindestzeit unterschreitet der Retarder zurückgeregelt wird.

3. Verfahren zur Regelung eines Retarders eines Kraftfahrzeugs nach Anspruch 1 oder 2, **dadurch gekennzeichnet, dass** die Rückregelstrategie auf einer Leistungsaufnahmeberechnung basiert.

4. Verfahren zur Regelung eines Retarders eines Kraftfahrzeugs nach Anspruch 3, **dadurch gekennzeichnet, dass** die vom Wärmetauscher übertragene Leistung $Q_{WT}$ wie folgt berechnet wird:

$$Q_{WT} = \theta_{WT}\,(n_{\mathrm{Re}tarder},Gang)*f_{WT}*(T_{\mathrm{Re}tarder\,aus} - T_{KM\,vorWT})\,,$$

mit $f_{WT}$ = fahrzeugspezifischer Korrekturfaktor, der durch bestimmte Betriebspunkte während des Betriebes identifiziert oder am Bandende eingegeben werden kann;
$T_{Öl\,Retarderaus}$ = Retarderaustrittstemperatur;
$T_{KMvorWT}$ = Kühlmitteleintrittstemperatur; und
$\theta_{WT} = f(n_{Retarder},Gang)$ = Wärmeübertragungskennfeld, das durch Vorrechnungen bestimmt wird, wobei für einen Gang ein ein- oder mehrdimensionales Polynom verwendet wird.

**5.** Verfahren zur Regelung eines Retarders eines Kraftfahrzeugs nach Anspruch 4, **dadurch gekennzeichnet, dass** der aktuelle Energieinhalt des Systems durch die Formel

$$E_{R,akt} = \sum m_i\, cp_i\, (T_i - T_{Basis}) + P_R \Delta t - \theta_{WT}\, (T_{\ddot{O}l} - T_{KM})\Delta t$$

wiedergegeben wird und dass die noch verbleibende Zeit $\Delta t$ bis das System überhitzt sich aus folgender Gleichung ergibt:

$$\frac{E_{max,R} - \sum m_i\, cp_i\, (T_i - T_{Basis})}{P_R - \theta_{WT}\, (T_{\ddot{O}l} - T_{KM})} = \Delta t,$$

wobei $E_{max,\,R}$ die maximale Energieaufnahmefähigkeit des Retarders und des Wärmetauschers ist und $P_R$ die Leistung des Radiators ist, wobei

$$\frac{T_{max,R} - T_{\ddot{O}l}}{P_R - \theta_{WT}\, (T_{\ddot{O}l} - T_{KM})} = \frac{\Delta t}{m\, cp} = A$$

$$\left[\frac{T_{max,R} - T_{\ddot{O}l}}{A} - \theta_{WT}\, (T_{\ddot{O}l} - T_{KM})\right]\frac{1}{\omega_R} = M_R$$

und wobei A in K/W eine Kenngröße für die Temperaturerhöhung mit der Retarderleistung ist.

**6.** Verfahren zur Regelung eines Retarders eines Kraftfahrzeugs nach Anspruch 5, **dadurch gekennzeichnet, dass** für den Fall, dass als Kühlmittel-Temperatur $T_{KM}$ die höchste zulässige Temperatur angenommen wird, das maximale Retardermoment $M_R$ ermittelt wird, wobei, wenn die Kühlmittel-Temperatur $T_{KM}$ gemessen, indirekt abgeleitet oder rechnerisch bestimmt wird, das Retardermoment zusätzlich erhöht wird.

**7.** Verfahren zur Regelung eines Retarders eines Kraftfahrzeugs nach Anspruch 4, 5 oder 6, **dadurch gekennzeichnet, dass** bei der Berechnung der vom Wärmetauscher übertragenen Leistung $Q_{WT}$ die Druckabhängigkeit der Siedetemperatur des Kühlmittels berücksichtigt wird.

**8.** Verfahren zur Regelung eines Retarders eines Kraftfahrzeugs nach Anspruch 7, **dadurch gekennzeichnet, dass** ein Minimalwert der Siedetemperatur des Kühlmittels $T_{Siede,max}$ durch folgende Funktion in Abhängigkeit von der Motordrehzahl $n_{Mot}$ dargestellt wird,

$$T_{Siede,max} = T_{Siede;1bar} + n_{Mot} * f_{Siede},$$

wobei $f_{Siede}$ die Erhöhung der Siedetemperatur in Abhängigkeit von der Motordrehzahl wiedergibt und wobei zur Bestimmung der Kühlmitteleintrittstemperatur eine fahrzeugspezifische Kühlmitteltemperatur vor dem Wärmetauscher benötigt wird, welche fahrzeug-, umgebungs- und wartungsabhängig ist und durch Messung mittels eines Temperatursensors oder durch Annahme eines konservativen Startwertes und eine anschließende rechnerische Korrektur während des Dauerlastbetriebes ermittelt wird.

**9.** Verfahren zur Regelung eines Retarders eines Kraftfahrzeugs nach Anspruch 7 oder 8, **dadurch gekennzeichnet, dass** eine zusätzliche motordrehzahlabhängige Siededruckkorrektur durchgeführt wird.

**10.** Verfahren zur Regelung eines Retarders eines Kraftfahrzeugs nach Anspruch 9, **dadurch gekennzeichnet, dass** die Kühlmitteltemperatur vor dem Wärmetauscher durch $T_{KMvorWT} = T_{KM\ vorWT,Basis} - (T_{R,max} - T_R) - n_{Mot} * f_{Siede}$ berechnet wird, wobei $T_{R,max}$ die am Retarderöltemperatursensor maximal zulässige Dauertemperatur ist.

**11.** Verfahren zur Regelung eines Retarders eines Kraftfahrzeugs nach Anspruch 9, **dadurch gekennzeichnet, dass** die Kühlmitteltemperatur vor dem Wärmetauscher mittels eines Siedesensors und anschließender Berechnung oder mittels eines Siedesensors und anschließender Korrektur berechnet wird.

**12.** Verfahren zur Regelung eines Retarders eines Kraftfahrzeugs nach Anspruch 9, 10 oder 11, **dadurch gekennzeichnet, dass**, wenn bei der aktuellen Kühlmitteltemperatur vor dem Wärmetauscher $T_{KM\ vorWT}$ und Dauerbetrieb kein Sieden erkannt wird, $T_{KM\ vor\ WT}$ schrittweise verringert anderenfalls schrittweise erhöht wird.

**13.** Verfahren zur Regelung eines Retarders eines Kraftfahrzeugs nach einem der vorangehenden Ansprüche, **dadurch gekennzeichnet, dass** eine Leistungsanpassung durch Kühlmittel-Druckmessung vor und/oder nach dem Wärmetauscher durchgeführt wird.

**14.** Verfahren zur Regelung eines Retarders eines Kraftfahrzeugs nach einem der vorangehenden Ansprüche, **dadurch gekennzeichnet, dass** die Einstellung der Kühlmitteleintrittstemperatur durch eine Langzeitkorrektur optimiert wird, bei der bei jedem Überschreiten der zulässigen Toleranzgrenze die Kühlmitteleintrittstemperatur um einen Langzeitkorrekturwert $T_{Langzeit}$ korrigiert wird.

**15.** Verfahren zur Regelung eines Retarders eines Kraftfahrzeugs nach einem Anspruch 14, **dadurch gekennzeichnet, dass** der Langzeitkorrekturwert $T_{Langzeit}$ in kleinen Temperaturschritten bei jedem Dauerbetrieb des Retarders erhöht wird, bis eine Retarderabregelung im Dauerbetrieb im Kühlsystem erfolgt, wobei, wenn $B = T_{Rmax} - T_R$ negativ wird $T_{Langzeit}$ um den Betrag B verringert wird und wobei diese Anpassung einmal täglich, wöchentlich oder monatlich erfolgt.

**16.** Verfahren zur Regelung eines Retarders nach Anspruch 4, **dadurch gekennzeichnet, dass** ein Öl-Luft Wärmetauscher eingesetzt wird wobei gilt:

$$Q_{Radiator} = Q_{Radiator}\ (n_{Retarder,}\ n_{Lüfter}) f_{Radiator}\ (T_{Retarder\ aus} - T_{Luft})$$

mit

$Q_{Radiator}$ = Radiatorleistung;
$Q_{Radiator}$ = Wärmeübertragungfähigkeitskennfeld, das durch Vorrechnungen bestimmt wird;
$f_{Radiator}$ fahrzeugspezifischer Korrekturfaktor, der durch bestimmte Betriebspunkte während des Betriebes identifiziert oder am Bandende eingegeben werden kann; und
$T_{Luft}$ Lufttemperatur am Radiatoreneintritt.

EP 2 011 706 A2

Fahrt — ja / nein

TSiede 1< TnachWT — ja / nein

Optimalen Gang n bestimmen

Meldung augeben:
"Optimalen Gang n einlegen"

TSiede 1< TnachWT — ja / nein

TSiede 2< TÖl — ja / nein

Meldung ausgeben:
"Motordrehzahl erhöhen"

Meldung ausgeben:
"Motor laufen lassen"

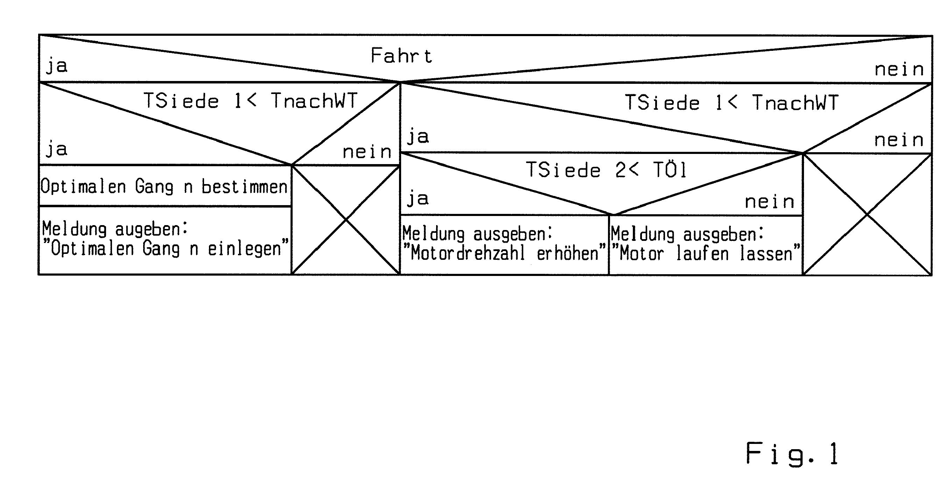

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19716919 C2
- DE 19716919 A1
- DE 19848544 C1
- DE 10009959 A1